# EUROPÄISCHE PATENTSCHRIFT

(11) **EP 1 495 663 B1**
(45) Veröffentlichungstag und Bekanntmachung des Hinweises auf die Patenterteilung: **25.08.2010**
(21) Anmeldenummer: 04013988.3
(22) Anmeldetag: 15.06.2004
(51) Int. Cl.: A01D 41/127

(54) **Verfahren und Vorrichtung zum Betreiben von Arbeitsmaschinen**
Method and device for the operation of a working machine
Procédé et dispositif pour opérer une machine de travail

(30) Priorität: 02.07.2003 DE 10329932
(43) Veröffentlichungstag der Anmeldung: 12.01.2005
(73) Patentinhaber: CLAAS Selbstfahrende Erntemaschinen GmbH, 33428 Harsewinkel (DE)
(72) Erfinder: Fitzner, Werner, 48336 Sassenberg (DE)

(56) Entgegenhaltungen:
- EP-A- 0 928 554
- EP-A- 1 031 263
- EP-A- 1 277 388
- DE-A- 4 033 574
- DE-A- 10 120 173

## Beschreibung

Die Erfindung betrifft ein Verfahren und eine Vorrichtung zum Betreiben von Arbeitsmaschinen gemäß den Oberbegriffen der Ansprüche 1 und 24.

Aus dem Stand der Technik sind eine Vielzahl von Systemen bekannt geworden, die den Betreiber von Arbeitsmaschinen, insbesondere landwirtschaftlichen Arbeitsmaschinen, bei der Einstellung optimaler Betriebsparameter der Arbeitsmaschine unterstützen. Beispielhaft sei hier auf die EP 0 928 554 verwiesen, in der ein System zur Maschineneinstellung offenbart wird, welches in Abhängigkeit von verschiedenen Konstellationen äußerer Erntebedingungen optimale Betriebsparameter von Arbeitsorganen der landwirtschaftlichen Arbeitsmaschine ermittelt, diese abspeichert und je nach Ausführung die Einstellung dieser Parameter an den entsprechenden Arbeitsorganen vornimmt. Zur Ermittlung dieser optimierten Betriebsparameter verfügt das System über diverse an sich bekannte Sensorsysteme, die innerhalb der Arbeitsmaschine Effizienzparameter wie Kornverlust und Durchsatz ermitteln und aus diesen unter Berücksichtigung äußerer Randbedingungen in einer Auswert- und Verrechnungseinheit optimierte Betriebsparameter für die Arbeitsorgane der landwirtschaftlichen Erntemaschine generiert. Der Effekt eines solchen Systems wird unter anderem dadurch noch gesteigert, dass die in einer Arbeitsmaschine optimierten Parameter und die dazugehörigen äußeren Randbedingungen in Datensätzen abgespeichert werden, die auch von Betreibern anderer Arbeitsmaschinen abrufbar sind. Damit kann der Optimierungsprozess der Betriebsparameter der weiteren Arbeitsmaschinen beschleunigt werden.

Derartige Systeme haben jedoch den Nachteil, dass der auf einen bereits generierten Datensatz zurückgreifende Betreiber zunächst eine Vorauswahl treffen muss, welcher der ihm zur Verfügung stehenden Datensätze auf seinen konkreten Betriebsfall anwendbar ist. Dies hängt insbesondere von den Erfahrungen des jeweiligen Betreibers der landwirtschaftlichen Arbeitsmaschine ab und wird insbesondere immer dann schwierig, wenn die zu den jeweils optimierten Parametern gehörenden äußeren Randbedingungen von den äußeren Randbedingungen des konkreten Einsatzfalles abweichen. Im ungünstigsten Fall kann dies dazu führen, dass der Betreiber einer landwirtschaftlichen Arbeitsmaschine trotz Rückgriffs auf bereits optimierte Maschinenparameter wegen der abweichenden äußeren Randbedingungen eine zufrieden stellende Optimierung seiner Betriebsparameter nicht erreicht, sodass er letztlich gezwungen ist auf sein Erfahrungswissen zurückgreifend eine eigenständige Optimierung der Betriebsparameter seiner Arbeitsmaschine vorzunehmen. Derartige Einstellvorgänge können jedoch sehr zeitaufwendig sein, da in landwirtschaftlichen Arbeitsmaschinen eine Vielzahl von Betriebsparametern, die sich zudem noch untereinander beeinflussen, einzustellen sind und die Einstellbereiche der einzelnen Betriebsparameter zum Teil sehr große Bandbreiten aufweisen.

Der Erfindung liegt deshalb die Aufgabe zugrunde, ein System zur Optimierung von Parametereinstellungen an Arbeitsmaschinen vorzuschlagen, welches die beschrieben Nachteile des Standes der Technik vermeidet sowie einen schnellen und damit effizienten Optimierungsvorgang von Betriebsparametern einer Arbeitsmaschine ermöglicht.

Erfindungsgemäß wird die Aufgabe durch ein Verfahren und eine Vorrichtung mit den kennzeichnenden Merkmalen der Ansprüche 1 und 24 gelöst.

Indem in einer Arbeitsmaschine der Sollwert eines spezifischen Parameters änderbar ist und diese Änderung des jeweiligen Sollwerts aus einer Vielzahl von Arbeitsmaschinen zur Ableitung eines ausgeprägten Benutzerverhaltens herangezogen wird, werden die Voraussetzungen für eine schnellere und damit effizientere Optimierung von spezifischen Parametern einer Arbeitsmaschine geschaffen. Dies ist insbesondere deshalb der Fall, da durch die Ermittlung eines ausgeprägten Benutzerverhaltens auf optimierte Parametereinstellungen zurückgegriffen wird, die bereits in einer Vielzahl von Anwendungsfällen und nicht nur in einem konkreten Einzelfall als optimale Parametereinstellung bestätigt wurden.

Nach einer vorteilhaften Ausgestaltung der Erfindung kann das ausgeprägte Benutzerverhalten im einfachsten Fall dadurch ermittelt werden, dass die Änderung des jeweiligen Sollwerts einer Vielzahl von Arbeitsmaschinen registriert und zudem die Häufigkeit dieser Änderung ermittelt wird.

Die Qualität des ermittelten ausgeprägten Benutzerverhaltens kann in vorteilhafter Weiterbildung der Erfindung dadurch beeinflusst werden, dass die Änderung des jeweiligen Sollwertes qualitativ und/oder quantitativ ermittelt wird. Auf diese Weise können dem ausgeprägten Benutzerverhalten einerseits Informationen darüber entnommen werden, welche Parameter unter bestimmten äußeren Randbedingungen sinnvoller Weise überhaupt zu ändern sind und andererseits kann das ermittelte ausgeprägte Benutzerverhalten konkrete Werte oder Wertebereiche für die zu ändernden Sollwerte vorgeben.

Auf besonders einfache Weise kann die Änderung der Sollwerte in qualitativer und quantitativer Hinsicht dann ermittelt werden, wenn die geänderten Sollwerte so genannte Istwerte bilden, die in Häufigkeitsklassen gleicher oder ähnlicher Istwerte zusammengefasst werden aus denen dann die Häufigkeit der Änderung der Sollwerte und deren Wertebereiche ermittelbar sind. Im einfachsten Fall beschränkt sich die qualitative Änderung des Sollwertes auf die Registrierung der Anzahl der Änderung des jeweiligen Sollwertes während die quantitative Ermittlung der Änderung des jeweiligen Sollwertes die Registrierung bestimmter Bereiche gleicher oder ähnlicher Istwerte umfasst.

Die Qualität des ermittelten ausgeprägten Benutzerverhaltens kann auch dadurch verbessert werden, dass zur Generierung des ausgeprägten Benutzerverhaltens nur die durch erfahrene Bediener vorgenommenen Änderungen der Sollwerte berücksichtigt werden. Die Aussagefähigkeit des ermittelten ausgeprägten Benutzerverhaltens kann auch dadurch verbessert werden, dass die Änderung der Sollwerte ereignisgesteuert registriert wird. Damit führt jede Änderung des Sollwertes zur Beeinflussung des zu ermittelnden ausgeprägten Benutzerverhaltens, wobei sich dessen Plausibilität mit Zunahme der Eingangsdatensätze verbessert.

Zur rechnergestützten Ermittlung des ausgeprägten Benutzerverhaltens und zur Nachnutzung dieses Benutzerverhaltens durch Bediener anderer Arbeitsmaschinen ist es sinnvoll, die ermittelten Häufigkeiten, die Parameter der Häufigkeitsklassen, die neben den Sollwerten auch die Istwerte umfassen, sowie die Parameter der inneren und äußeren Randbedingungen in zusammenhängenden Datensätzen abzuspeichern. Dabei werden vorteilhafter Weise die inneren Randbedingungen von spezifischen Parametern der Arbeitsmaschine selbst und die äußeren Randbedingungen etwa von witterungsspezifischen, geografischen und entegutspezifischen Daten gebildet.

In vorteilhafter Weiterbildung der Erfindung wird das ermittelte ausgeprägte Benutzerverhalten zur Ableitung allgemeiner Regeln herangezogen, die auf spezifische Parameter anderer Arbeitsmaschinen unter anderen inneren und äußern Randbedingungen übertragbar sind. Dies führt auch bei einer geringeren Anzahl zur Verfügung stehender Eingangsdatensätze oder bei für bestimmte Randbedingungen fehlenden Eingangsdatensätzen zu einer hohen Genauigkeit des abgeleiteten ausgeprägten Benutzerverhaltens. Zudem ermöglicht dies die Erstellung von spezifischen Kundenprofilen für unterschiedlichste äußere und innere Randbedingungen.

In vorteilhafter Weiterbildung der Erfindung wird das ermittelte ausgeprägte Benutzerverhalten zur Generierung von Basiseinstellungen für die Sollwerte der Parameter der Arbeitsmaschine genutzt, wobei diese Basiseinstellungen für beliebige Arbeitsmaschinen verfügbar sein können.

Eine besonders nutzerfreundliche Anwendung des ermittelten ausgeprägten Benutzerverhaltens ergibt sich dann, wenn der Betreiber einer Arbeitsmaschine die Basiseinstellungen in Abhängigkeit von relevanten inneren und äußeren Randbedingungen abrufen kann. Diese Nutzerfreundlichkeit kann auch in der Weise weiter verbessert werden, dass die auf den konkreten Anwendungsfall passenden Sollwerte der spezifischen Parameter der Arbeitsmaschine automatisch an den entsprechenden Arbeitsorganen eingestellt werden und die Basiseinstellungen durch den Betreiber der Arbeitsmaschine änderbar sind.

Je nach Anwendungsfall kann die Ermittlung des ausgeprägten Benutzerverhaltens zentral oder dezentral erfolgen. Soll beispielsweise die Optimierung von spezifischen Parametern zwischen Arbeitsmaschinen erfolgen, die unter im Grunde gleichen oder ähnlichen Bedingungen und in räumlicher Nähe zueinander arbeiten, wie dies in sogenannten Maschinenflotten bei landwirtschaftlichen Anwendungsfällen häufig anzutreffen ist, ist es von Vorteil das ausgeprägte Benutzerverhalten auf diesen Maschinenkreis zu beschränken. Insbesondere hat das den Vorteil, dass die ermittelten Basiseinstellungen schon erheblich präziser auf den konkreten Anwendungsfall abgestimmt sind, so dass auf diese Weise die Optimierungszeit nochmals verringert werden kann.

Eine besonders einfache konstruktive Ausführung einer Vorrichtung zur Durchführung des erfindungsgemäßen Verfahrens ergibt sich dann, wenn eine Vielzahl von Arbeitsmaschinen zumindest eine Eingabe- und Anzeigeeinheit zur Generierung von Datensätzen aufweisen und diese Datensätze über ein Datenaustauschsystem an ein Datenbanksystem übergeben werden, wobei das Datenbanksystem aus diesen Datensätzen ein ausgeprägtes Benutzerverhalten generiert welches wieder über das Datenaustauschsystem von der Eingabe und Anzeigeeinheit einer Vielzahl von Arbeitsmaschinen abrufbar ist.

Weitere vorteilhafte Ausgestaltungen sind Gegenstand weiterer Unteransprüche und werden nachfolgend an Hand eines in Zeichnungen dargestellten Ausführungsbeispiels näher erläutert.

Es zeigen
- Figur 1: eine als Mähdrescher ausgeführte Arbeitsmaschine und deren Arbeitsorgane
- Figur 2: den Mähdrescher nach Figur 1 mit Sensoreinheiten zur Ermittlung spezifischer Parameter
- Figur 3: eine schematische Darstellung des erfindungsgemäßen Verfahrens in Flussbilddarstellung
- Figur 4: ein Detail des Flussbildes nach Figur 3

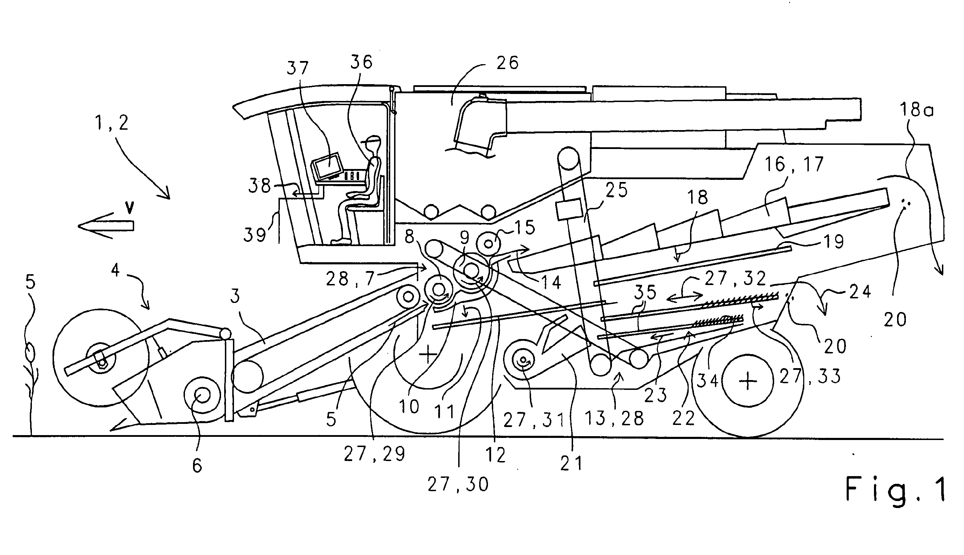

Figur 1 zeigt eine als Mähdrescher 2 ausgeführte Arbeitsmaschine 1, die in ihrem frontseitigen Bereich ein an einem Schrägförderer 3 angeordnetes Schneidwerk 4 aufnimmt, welches das gewachsene Erntegut 5 aberntet und über ein Förderorgan 6 dem Schrägförderer 3 zuführt. Über den Schrägförderer 3 gelangt das Erntegut 5 in an sich bekannter Weise in die Dreschorgane 7, die im dargestellten Ausführungsbeispiel aus einer ersten Dreschtrommel 8 und einer dieser nachgeordneten zweiten Dreschtrommel 9 bestehen. Im Bereich der Dreschorgane 7 wird am Dreschkorb 10 ein erster, im Wesentlichen aus Körner, Kurzstroh und Spreu bestehender erster Gutstrom 11 abgeschieden, der über einen Vorbereitungsboden 12 in die Reinigungseinrichtung 13 gelangt. Ein weiterer Gutstrom 14 wird im rückwärtigen Bereich der Dreschorgane 7 mittels Wendetrommel 15 an eine als Hordenschüttler 17 ausgeführte Trenneinrichtung 16 übergeben. Auf dem Hordenschüttler 17 wird ein weiterer im Wesentlichen aus Körnern, Kurzstroh und Spreu bestehender Gutstrom 18 über einen Rücklaufboden 19 und den Vorbereitungsboden 12 ebenfalls an die Reinigungseinrichtung übergeben. Zudem tritt am Ende des Hordenschüttlers 17 ein im Wesentlichen aus Stroh und zu einem geringen Anteil aus Körnern, dem sogenannten Kornverlüst 20, bestehender Gutstrom 18a aus dem Mähdrescher 2 aus. Es liegt im Rahmen der Erfindung, dass die Dreschorgane 7 und der Hordenschüttler 17 auch durch nicht näher dargestellte und an sich bekannte axial umlaufende Dresch- und Trennrotoren oder auch nur der Hordenschüttler 17 durch einen axial umlaufenden Trennrotor ersetzt sein kann.

In der im Wesentlichen aus einem Gebläse 21 und Siebanordnungen 22 bestehenden Reinigungseinrichtung 13 werden die in die Reinigungseinrichtung 13 gelangenden Gutströme 11, 18 in der Weise gereinigt, dass ein im Wesentlichen aus Körnern bestehender Körnerstrom 23 und ein im Wesentlichen aus Kurzstroh, Spreu und einem Anteil Verlustkörnern 20 bestehender weiter Gutstrom 24 gebildet wird. Der Körnerstrom 23 wird schließlich über Förderelevatoren 25 in einem sogenannten Korntank 26 zwischengespeichert.

Damit neben einem hohen Ausdruschgrad der Dreschorgane 7 und einem geringen Anteil an Verlustkörnern 20 dennoch eine möglichst hohe Fahrgeschwindigkeit v des Mähdreschers realisierbar ist, sind verschiedenste noch näher zu beschreibende spezifische Parameter 27 der Arbeitsorgane 28 des Mähdreschers 2 einstellbar. Zur Erläuterung der Erfindung wird an Hand des dargestellten Ausführungsbeispiels nur auf wesentliche spezifische Parameter 27 des Mähdreschers 2 eingegangen. Ein Arbeitsorgan 28 bilden die aus Dreschtrommeln 8, 9 und dem diese wenigstens teilweise umgebenden Dreschkorb 10 bestehenden Dreschorgane 7, deren spezifische Parameter 27 die Drehzahlen 29, 30 der Dreschtrommeln 8, 9 sind. Ein weiteres, wichtiges Arbeitsorgan 28 des Mähdreschers 2 bildet die aus dem Gebläse 21 und der Siebanordnung 22 bestehende Reinigungseinrichtung 13. Die einstellbaren spezifischen Parameter 27 der Siebeinrichtung 13 sind die Gebläsedrehzahl 31, die Schwingfrequenz 32 der Siebanordnung 22 sowie die Sieböffnungsweite 33 der Sieblamellen 34 der Einzelsiebe 35 der Siebanordnung 22. In an sich bekannter Weise stehen dem Bediener 36 zur Einstellung der spezifischen Parameter 27 entweder unmittelbar an den jeweiligen Arbeitsorganen 28 nicht näher dargestellte Einstellmittel zur Verfügung oder er kann diese Einstellungen über eine Eingabe- und Anzeigeeinheit 37 eingeben, wobei die unmittelbare Einstellung dieser spezifischen Parameter 27 dann von den an sich bekannten Einstellmitteln dadurch erreicht wird, dass die Eingabe- und Anzeigeeinheit 37 Stellsignale 38 generiert, die mittels Datenübertragungssystem 39 an die Einstellmittel übergeben werden.

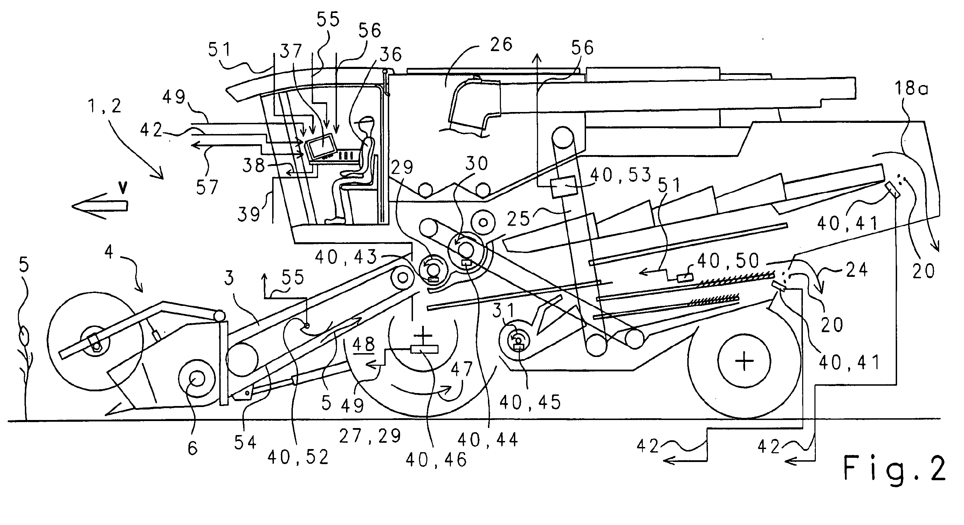

Damit die einstellbaren spezifischen Parameter 27 niedrige Kornverluste 20 und zugleich an den jeweiligen Durchsatz angepasste Fahrgeschwindigkeiten v ermöglichen, verfügt der Mähdrescher 2 gemäß Figur 2 in an sich bekannter Weise über verschiedene Sensoreinheiten 40 die innerhalb der Arbeitsmaschine 1 sowohl erntegutspezifische als auch maschinenspezifische Parameter 27 ermitteln, die dann zur Optimierung der jeweiligen spezifischen Parameter 27 herangezogen werden. Dabei umfassen die Sensoreinheiten 40 im einfachsten Fall sogenannte Kornverlustsensoren 41, die in der Regel aus dem durch den Kontakt der Körner mit den Kornverlustsensoren 41 erzeugten Körperschall Kornverlustsignale 42 generieren, die in der Eingabe- und Anzeigeeinheit 37 die wertmäßige Darstellung der Kornverluste 20 ermöglichen. Eine weitere Gruppe von Sensoreinheiten 40 bilden an sich bekannte Drehzahlsensoren 43-46 die zur Ermittlung der Dreschtrommeldrehzahlen 29, 30 sowie der Gebläsedrehzahl 31 und der Fahrgeschwindigkeit v herangezogen werden, wobei letztere die Fahrgeschwindigkeit v durch Ermittlung der Drehzahl 47 zumindest eines Laufrades 48 des Mähdreschers 2 ermitteln. Jeder dieser Drehzahlsensoren 43-46 generiert Eingangssignale 49 (aus Übersichtlichkeitsgründen in Fig. 2 schematisch nur für Sensor 46 eingezeichnet) die in der Eingabe- und Anzeigeeinheit 37 zu reellen Werten für die jeweiligen Drehzahlen 29-31 verrechnet und gegebenenfalls angezeigt werden. Zudem verfügt der Mähdrescher 2 über eine Sensoreinheit 50, die die Schwingfrequenz 32 sowie die Sieböffnungsweite 33 der Einzelsiebe 35 der Siebanordnung 22 sensieren kann, wobei die Sensoreinheit 50 wiederum Eingangssignale 51 für die Eingabe- und Anzeigeeinheit 37 generiert die in dieser zur Darstellung reeller Werte für die Schwingfrequenz 32 und die Sieböffnungsweite 33 führt. Damit zudem der den Mähdrescher 2 durchlaufende Gutdurchsatz bestimmt werden kann verfügt der Mähdrescher 2 weiterhin über sogenannte Durchsatzsensoren 52, 53. Dabei ist einer der Durchsatzsensoren 52 im Bereich des Schrägförderers 3 in an sich bekannter Weise angeordnet, wobei der Durchsatzsensor 52 die erntegutmengenabhängige Auslenkung des umlaufenden Fördermittels 54 ermittelt und aus dieser ein Eingangssignal 55 generiert, welches in der Eingabe- und Anzeigeeinheit 37 zur Darstellung reeller Werte für den Gesamtdurchsatz an Erntegut 5 führt. Der weitere Durchsatzsensor 53 ist als an sich bekannter Kornmengensensor 53 ausgebildet und in dem zum Korntank 26 führenden Förderelevator 25 angeordnet. Das von dem Kornmengensensor 53 generierte Eingangssignal 56 führt schließlich in der Eingabe- und Anzeigeeinheit 37 zur Darstellung eines reellen Kornmengenwertes. Zudem verfügt der Mähdrescher über ein an sich bekanntes weiteres Datenaustauschsystem 57, über welches mittels der Eingabeund Anzeigeeinheit 37 Daten zwischen dem Mähdrescher 2 und noch näher darzustellenden externen Systemen ausgetauscht werden können.

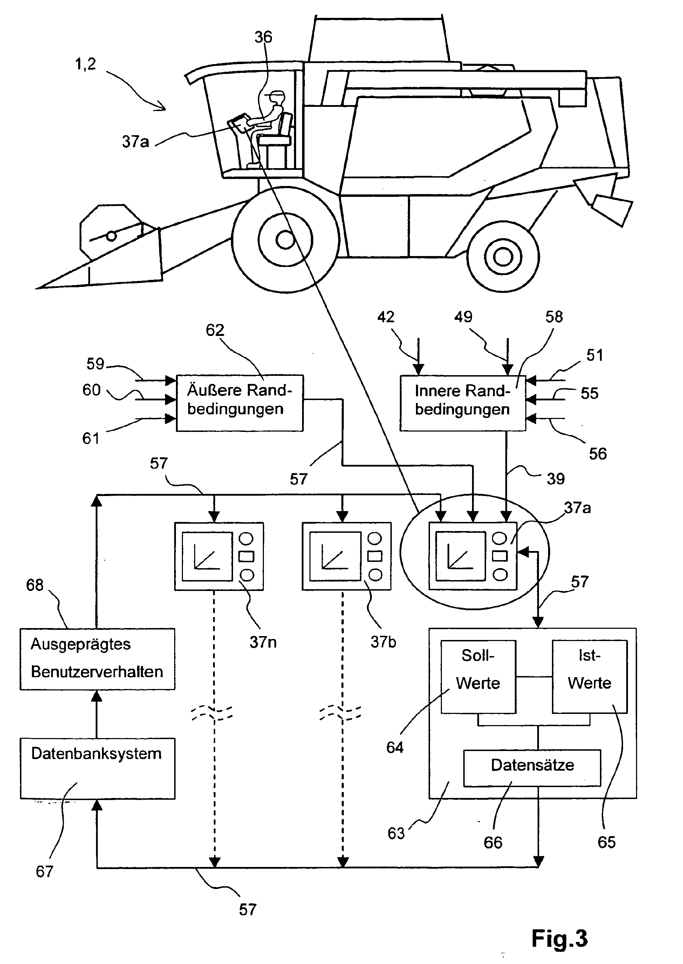

In Fig. 3 ist das erfindungsgemäße Verfahren schematisch an Hand eines Flussdiagramms dargestellt. Dabei ist aus Übersichtlichkeitsgründen die in den Mähdrescher 2 integrierte Eingabe- und Anzeigeeinheit 37 vergrößert dargestellt. Gemäß vorherigen Ausführungen werden die von den verschiedenen Sensorsystemen 40 generierten Eingangssignale 42, 49, 51, 55, 56 über ein dem Mähdrescher 2 zugeordnetes Datenübertragungssystem 39 an die Eingabe- und Anzeigeneinheit 37 übermittelt. Die verschiedenen Eingangssignale 42, 49, 51, 55, 56 geben die spezifischen Parameter 27 der Arbeitsmaschine 1 wider, die im dargestellten Ausführungsbeispiel die maschinenspezifischen Parameter Dreschtrommeldrehzahl 29, 30, Gebläsedrehzahl 31, Schwingfrequenz 32, Sieböffnungsweite 33 sowie die Fahrgeschwindigkeit v und die erntegutspezifischen Parameter Kornverlust 20, Erntegutdurchsatz 5, 55 und Korndurchsatz 56 umfassen. Nach dem erfindungsgemäßen Verfahren bilden diese durch die verschiedenen Eingangssignale 42, 49, 51, 55, 56 repräsentierten spezifischen Parameter 27 die inneren Randbedingungen 58. Zudem können an die Eingabe- und Anzeigeeinheit 37 durch den Bediener 36 oder über das weitere Datenaustauschsystem 57 witterungsspezifische Daten 59, geografische Daten 60 über das Gebiet in dem der Mähdrescher 2 betrieben wird und erntegutspezifische Daten 61, wie etwa die Gutfeuchte, übermittelt werden, die zugleich die erfindungsgemäßen äußeren telt werden, die zugleich die erfindungsgemäßen äußeren Randbedingungen 62 repräsentieren. In an sich bekannter Weise wird aus diesen inneren und äußeren Randbedingungen 58, 62 mittels der Eingabe- und Anzeigeeinheit 37 durch den Bediener 36 eine Optimierung der verschiedenen durch die jeweiligen Eingangssignale 42, 49, 51, 55, 56 repräsentierten spezifischen Parameter 27 vorgenommen, wobei die maßgeblichen Optimierungskriterien niedrige Kornverluste 20 und eine möglichst hohe, den Erntegutdurchsatz 5 bestimmende Fahrgeschwindigkeit v sind. Dabei nimmt der Bediener 36 oder die Eingabe- und Anzeigeeinheit 37 in Abhängigkeit von den inneren und äußeren Randbedingungen 58, 62 eine mehr oder weniger häufige Änderung verschiedener spezifischer Parameter 27 vor. Zur Durchführung des erfindugsgemäßen Verfahrens ist es ferner erforderlich, dass eine Vielzahl von Arbeitsmaschinen 1 über jeweils eine Eingabe- und Auswerteinheit 37a-n verfügen, wobei jede der Eingabe- und Auswerteinheiten 37a-n in der beschriebenen Weise eine Optimierung der spezifischen Parameter 27 der jeweiligen Arbeitsmaschine 1 vornimmt Da derartige Optimierungsvorgänge regelmäßig ihren sogenannten stationären Zustand erst nach einer bestimmten Einstellzeit erreichen kann ferner in der Eingabe- und Anzeigeeinheit 37 ein Modul 63 vorgesehen sein, welches die Änderung der Sollwerte 64 der spezifischen Parameter 27 registriert und einen stationären Zustand der spezifischen Parameter 27 ab dem diese sich nicht mehr ändern erkennt, wobei die nunmehr eingestellten spezifischen Parameter 27 als Istwerte 65 der zuvor eingestellten Sollwerte 64 abgespeichert werden. Nach Erkennen des stationären Zustandes generiert die Eingabe- und Anzeigeeinheit 37 Datensätze 66, die im Wesentlichen die inneren und äußeren Randbedingungen 58, 62 sowie die Istwerte 65 der spezifischen Parameter 27 umfassen. Diese Datensätze 66 werden über das weitere Datenaustauschsystem 57 an ein externes Datenbanksystem 67 übermittelt, welches dann in noch näher zu beschreibender Weise aus den empfangenen Datensätzen 66 einer Vielzahl von Arbeitsmaschinen 1 ein ausgeprägtes Benutzerverhalten 68 ableitet und dieses in noch näher zu beschreibender Weise wieder über das weitere Datenaustauschsystem 57 an die Eingabe- und Anzeigeeinheit 37a..n übergibt oder von dieser abrufbar ist.

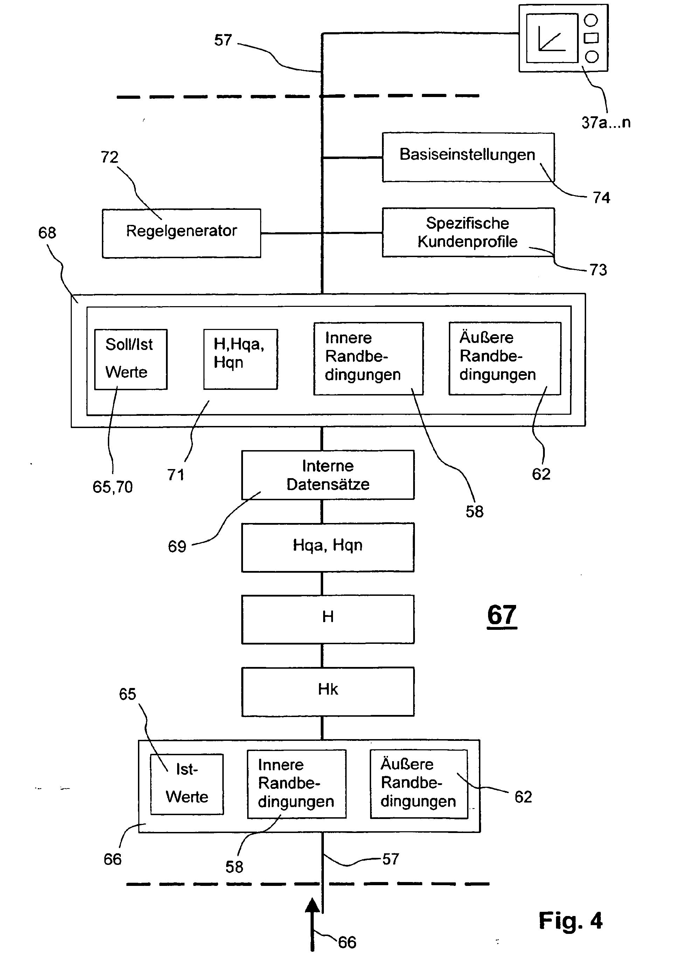

Das erfindungsgemäße Datenbanksystem 67 ist dabei entsprechend Fig. 4 so ausgeführt, dass es mittels der in den Datensätzen 66 hinterlegten Istwerte 65 die Änderung der Sollwerte 64 registriert und die Häufigkeit (H) der Änderung bestimmt. Dabei umfasst die bestimmte Häufigkeit H sowohl qualitative als auch quantitative Angaben Hqa, Hqn. Während die qualitative Häufigkeit Hqa sich allein auf die Registrierung der Anzahl der Änderungen des jeweiligen Sollwertes 64 innerhalb einer bestimmten Zeiteinheit beschränkt sind in der quantitativen Häufigkeit Hqn die konkreten Werte oder Wertebereiche der durch die Istwerte 65 bestimmten Änderung der Sollwerte 64 hinterlegt. Dies hat insbesondere den Vorteil, dass das zu ermittelnde ausgeprägte Benutzerverhalten 68 einerseits Informationen darüber enthalten kann, welche Sollwerte sinnvoller Weise überhaupt nur und in welchen Größenordnungen diese zu ändern sind, um niedrige Kornverluste 20 und hohe Fahrgeschwindigkeiten v unter Berücksichtigung der verschiedenen inneren und äußeren Randbedingungen 58, 62 zu realisieren. Damit die verschiedenen Häufigkeiten H, Hqa, Hqn mittels einfacher mathematischer Methoden bestimmt werden können ist es sinnvoll, die Istwerte 65 der spezifischen Parameter 27 zunächst in Häufigkeitsklassen Hk gleicher oder ähnlicher Istwerte zusammenzufassen, aus denen dann die Häufigkeit H der Änderung der Sollwerte 64 bestimmt wird. Damit das zu generierende ausgeprägte Benutzerverhalten 68 von hoher Qualität ist, verarbeitet das Datenbanksystem 67 idealerweise nur Datensätze 66, die von erfahrenen Bediener 36 generiert wurden. Zudem kann die jeweilige Eingabe- und Anzeigeeinheit 37a..n so ausgeführt sein, dass die Datensätze 66 ereignisgesteuert generiert werden, dass heißt, dass nur dann neue Datensätze 66 generiert werden, wenn sich die Istwerte 65 der spezifischen Parameter 27 aufgrund geänderter innerer und äußerer Randbedingungen 58, 62 ändern. Aufgrund dessen, dass die äußeren Randbedingungen 62 in landwirtschaftlichen Ernteprozessen tageszeitabhängig erheblich schwanken kann in vorteilhafter Weiterbildung dieses ereignisgesteuerte Generieren neuer Datensätze 66 auch in der Weise gestaltet sein, dass stets nur zu bestimmten Tageszeiten neue Datensätze 66 generiert werden und weniger signifikante Änderungen zwischen diesen vordefinierten Tageszeiten unterdrückt werden.

Damit aus den an das Datenbanksystem 67 übergebenen Datensätzen 66 und den ermittelten Häufigkeiten H, Hqa, Hqn ein ausgeprägtes Benutzerverhalten generiert werden kann, sind in dem Datenbanksystem 67 interne Datensätze 69 generier- und abspeicherbar, die im Wesentlichen die ermittelten Häufigkeiten H, Hqa, Hqn, sowie deren Parameter wie etwa die Tageszeit und die Istwerte 65 der spezifischen Parameter 27 in Abhängigkeit von den inneren und äußeren Randbedingungen 58, 62 umfassen. Aus diesen internen Datensätzen 69 generiert schließlich das Datenbanksystem 67 das erfindungsgemäße ausgeprägte Benutzerverhalten 68, welches im Wesentlichen aus den Istwerten 65, den Häufigkeiten H, Hqa. Hqn und den Daten der inneren und äußeren Randbedingungen 58, 62 gebildet wird, wobei die Istwerte 65 nunmehr neue Sollwerte 70 für die spezifischen Parameter 27 der Arbeitsmaschine 1 repräsentieren. Es liegt im Rahmen der Erfindung, dass die Datensätze 71 des ausgeprägten Benutzerverhaltens 68 neben den neuen Sollwerten 70 nur eine Auswahl der inneren und äußeren Randbedingungen 58, 62 sowie der Häufigkeiten H, Hqa, Hqn umfassen.

Ein besonders effizient arbeitendes Datenbanksystem 67 wird dann erreicht, wenn dem Datenbanksystem 67 ein sogenannter Regelgenerator 72 zugeordnet ist, der aus dem ermittelten ausgeprägten Benutzerverhalten 68 allgemeine Regeln ableitet, die auf spezifische Parameter 27 von Arbeitsmaschinen 1 anwendbar sind, die unter anderen als den in den Datensätzen 66 vorgegebenen inneren und äußeren Randbedingungen 58, 62 zu optimieren sind. Dies hat insbesondere den Vorteil, dass die Zahl der erforderlichen Datensätze 66 zur Generierung eines ausgeprägten Benutzerverhaltens 68 reduziert werden kann. Zudem können durch die Ableitung solcher allgemeiner Regeln typische Einsatzfälle vordefiniert werden. In vorteilhafter Weiterbildung der Erfindung kann das generierte ausgeprägte Benutzerverhalten 68 auch zur Definition spezifischer Kundenprofile 73 herangezogen werden, sodass der Optimierungsvorgang von spezifischen Parametern 27 einer Arbeitsmaschine 1 weiter verkürzbar ist. Zudem kann das ermittelte ausgeprägte Benutzerverhalten 68 zur Generierung von Basiseinstellungen 74 der Sollwerte 64 der spezifischen Parameter 27 der Arbeitsorgane 28 von Arbeitsmaschinen 1 herangezogen werden, was letztlich auch zu einer Verkürzung des Optimierungsvorganges der spezifischen Parameter 27 der jeweiligen Arbeitsmaschine 1 führt. In vorteilhafter Weiterbildung der Erfindung sind diese Basiseinstellungen 74 von beliebigen Arbeitsmaschinen 1 aus dem Datenbanksystem 67 abrufbar, wobei dieses Abrufen der Basiseinstellungen 74 zudem in Abhängigkeit von relevanten inneren und äußeren Randbedingungen 58, 62 erfolgen kann. In an sich bekannter Weise können derartige Basiseinstellungen 74 entweder durch den Bediener 36 der Arbeitsmaschine 1 unmittelbar oder wie bereits beschrieben selbsttätig über die Eingabe- und Anzeigeeinheit 37 an den entsprechenden Arbeitsorganen 28 eingestellt werden. Eine Änderung dieser Basiseinstellungen 74 wird entweder aufgrund der Datensätze 66 in dem Datenbanksystem 67 in erfindungsgemäßer Weise vorgenommen oder der Bediener 36 der Arbeitsmaschine 1 kann die übermittelten Basiseinstellungen unmittelbar über die Eingabeund Anzeigeeinheit 37 ändern.

Um global agierenden Arbeitsmaschinen 1 das erfindungsgemäße ausgeprägte Benutzerverhalten 68 verfügbar zu machen, wird dieses von einem zentral angeordneten Datenbanksystem 67 generiert, welches über geeignete Datenaustauschsysteme 57 weltweit kontaktiert werden kann. Sind hingegen spezifische Parameter 27 von in einem abgegrenzten Territorium agierenden Arbeitsmaschinen 1 zu optimieren, kann das ausgeprägte Benutzerverhalten 68 auch nur aufgrund von Datensätzen 66 dieser Arbeitsmaschinen 1 generiert werden, sodass in diesem Fall auch eine dezentrale nur die in diesem abgegrenzten Territorium agierenden Arbeitsmaschinen 1 berücksichtigendes Datenbanksystem 67 vorgesehen sein.

Die Erfindung ist nicht auf das beschriebene Ausführungsbeispiel beschränkt sondern kann an beliebigen Arbeitsmaschinen eingesetzt werden, um die beschriebenen Effekte zu erzielen.

### Bezugszeichenliste

- 1: Arbeitsmaschine
- 2: Mähdrescher
- 3: Schrägförderer
- 4: Schneidwerk
- 5: Erntegut
- 6: Förderorgan
- 7: Dreschorgane
- 8: Dreschtrommel
- 9: Dreschtrommel
- 10: Dreschkorb
- 11: Gutstrom
- 12: Vorbereitungsboden
- 13: Reinigungseinrichtung
- 14: Gutstrom
- 15: Wendetrommel
- 16: Trenneinrichtung
- 17: Hordenschüttler
- 18: Gutstrom
- 19: Rücklaufboden
- 20: Kornverlust
- 21: Gebläse
- 22: Siebanordnung
- 23: Körnerstrom
- 24: Gutstrom
- 25: Förderelevator
- 26: Korntank
- 27: spezifische Parameter
- 28: Arbeitsorgane
- 29: Dreschtrommeldrehzahl
- 30: Dreschtrommeldrehzahl
- 31: Gebläsedrehzahl
- 32: Schwingfrequenz
- 33: Sieböffnungsweite
- 34: Sieblamellen
- 35: Einzelsieb
- 36: Bediener
- 37: Eingabe- und Anzeigeeinheit
- 38: Stellsignal
- 39: Datenübertragungssystem
- 40: Sensoreinheit
- 41: Kornverlustsensor
- 42: Kornverlustsignal
- 43-46: Drehzahlsensor
- 47: Drehzahl
- 48: Laufrad
- 49: Eingangssignal
- 50: Sensoreinheit
- 51: Eingangssignal
- 52,53: Durchsatzsensor
- 54: Fördermittel
- 55,56: Eingangssignal
- 57: Datenaustauschsystem
- 58: innere Randbedingungen
- 59: witterungsspezifische Daten
- 60: geografische Daten
- 61: erntegutspezifische Daten
- 62: äußere Randbedingungen
- 63: Modul
- 64: Sollwert
- 65: Istwert
- 66: Datensätze
- 67: Datenbanksystem
- 68: ausgeprägtes Benutzerverhalten
- 69: interne Datensätze
- 70: Sollwerte
- 71: Datensätze
- 72: Regelgenerator
- 73: spezifisches Kundenprofil
- 74: Basiseinstellung
- v: Fahrgeschwindigkeit
- H: Häufigkeit
- Hqa: qualitative Häufigkeit
- Hqn: quantitative Häufigkeit
- Hk: Häufigkeitsklasse

## Patentansprüche

1. Verfahren zum Betreiben von Arbeitsmaschinen wobei der Sollwert mindestens eines spezifischen Parameters der Arbeitsmaschinen änderbar ist und dieser geänderte Sollwert den Istwert des spezifischen Parameters der jeweiligen Arbeitsmaschine bildet,
**dadurch gekennzeichnet,**
**dass** aus der Änderung des jeweiligen Sollwertes (64) einer Vielzahl von Arbeitsmaschinen (1, 2) ein ausgeprägtes Benutzerverhalten (68) abgeleitet wird.

2. Verfahren zum Betreiben von Arbeitsmaschinen nach Anspruch 1,
**dadurch gekennzeichnet,**
**dass** die Änderung des jeweiligen Sollwertes (64) des zumindest einen spezifischen Parameters (27) einer Vielzahl von Arbeitsmaschinen (1, 2) registriert und die Häufigkeit (H) der Änderung des jeweiligen Sollwertes (64) ermittelt wird.

3. Verfahren zum Betreiben von Arbeitsmaschinen nach einem der vorhergehenden Ansprüche,
**dadurch gekennzeichnet,**
**dass** die Änderung des jeweiligen Sollwertes (64) qualitativ (Hqa) und/oder quantitativ (Hqn) ermittelt wird.

4. Verfahren zum Betreiben von Arbeitsmaschinen nach einem der vorhergehenden Ansprüche,
**dadurch gekennzeichnet,**
**dass** die geänderten Sollwerte (64) Istwerte (65) bilden und die Istwerte (65) in Häufigkeitsklassen (Hk) gleicher oder ähnlicher Istwerte (65) zusammengefasst werden und aus diesen Häufigkeitsklassen (Hk) die Häufigkeit (H) der Änderung der den Istwerten (65) zugrunde liegenden Sollwerte (64) ermittelt wird.

5. Verfahren zum Betreiben von Arbeitsmaschinen nach einem der vorhergehenden Ansprüche,
**dadurch gekennzeichnet,**
**dass** die qualitative Ermittlung der Häufigkeit (Hqa) der Änderung des Sollwerts (64) die Registrierung der Anzahl der Änderung des jeweiligen Sollwertes (64) umfasst.

6. Verfahren zum Betreiben von Arbeitsmaschinen nach einem der vorhergehenden Ansprüche,
**dadurch gekennzeichnet,**
**dass** die quantitative Ermittlung der Häufigkeit (Hqn) der Änderung des Sollwertes (64) die Registrierung der Änderung des jeweiligen Sollwertes (64) innerhalb von Bereichen gleicher oder ähnlicher Istwerte (65) umfasst.

7. Verfahren zum Betreiben von Arbeitsmaschinen nach einem der vorhergehenden Ansprüche,
**dadurch gekennzeichnet,**
**dass** die Änderung der Sollwerte (64) durch erfahrene Bediener (36) der Arbeitsmaschinen (1, 2) vorgenommen wird.

8. Verfahren zum Betreiben von Arbeitsmaschinen nach einem der vorhergehenden Ansprüche,
**dadurch gekennzeichnet,**
**dass** die Registrierung der Änderung des Sollwertes (64) des spezifischen Parameters (27) der Arbeitsmaschine (1, 2) ereignisgesteuert erfolgt.

9. Verfahren zum Betreiben von Arbeitsmaschinen nach einem der vorhergehenden Ansprüche,
**dadurch gekennzeichnet,**
**dass** die ermittelten Häufigkeiten (H, Hqa, Hqn) und zumindest die Parameter der Häufigkeitsklassen (Hk) in Abhängigkeit von inneren und/oder äußeren Randbedingungen (58, 62) in Datensätzen (69) abspeicherbar sind.

10. Verfahren zum Betreiben von Arbeitsmaschinen nach Anspruch 9;
**dadurch gekennzeichnet,**
**dass** die Parameter der Häufigkeitsklassen (Hk) die jeweiligen Istwerte (65) umfassen.

11. Verfahren zum Betreiben von Arbeitsmaschinen nach Anspruch 9;
**dadurch gekennzeichnet,**
**dass** die inneren Randbedingungen (58) spezifische Parameter (27) der Arbeitsmaschine (1, 2) umfassen.

12. Verfahren zum Betreiben von Arbeitsmaschinen nach Anspruch 9;
**dadurch gekennzeichnet,**
**dass** die äußeren Randbedingungen (62) witterungsspezifische Daten (59), geografische Daten (60) und entegutspezifische Daten (61) sein können.

13. Verfahren zum Betreiben von Arbeitsmaschinen nach einem der vorhergehenden Ansprüche,
**dadurch gekennzeichnet,**
**dass** das ausgeprägte Benutzerverhalten (68) durch Datensätze (71) definiert wird, die durch die Istwerte (65) definierte Sollwerte (70), die Häufigkeiten (H, Hqa, Hqn), die Parameter der Häufigkeitsklassen (Hk) und die inneren und äußeren Randbedingungen (58, 62) umfassen können.

14. Verfahren zum Betreiben von Arbeitsmaschinen nach einem der vorhergehenden Ansprüche,
**dadurch gekennzeichnet,**
**dass** aus dem ermittelten ausgeprägten Benutzerverhalten (68) mittels Regelgenerator (72) allgemeine Regeln abgeleitet werden, die auf spezifische Parameter (27) anderer Arbeitsmaschinen (1, 2) unter anderen inneren und äußeren Randbedingungen (58, 62) übertragbar sind.

15. Verfahren zum Betreiben von Arbeitsmaschinen nach einem der vorhergehenden Ansprüche,
**dadurch gekennzeichnet,**
**dass** aus dem ermittelten ausgeprägten Benutzerverhalten (68) unter Berücksichtigung von inneren Randbedingungen (58) und/oder äußeren Randbedingungen (62) spezifische Kundenprofile (73) erstellbar sind.

16. Verfahren zum Betreiben von Arbeitsmaschinen nach einem der vorhergehenden Ansprüche,
**dadurch gekennzeichnet,**
**dass** das ermittelte ausgeprägte Benutzerverhalten (68) zur Generierung von Basiseinstellungen (74) der Sollwerte (64) der spezifischen Parameter (27) der Arbeitsmaschine (1, 2) genutzt wird.

17. Verfahren zum Betreiben von Arbeitsmaschinen nach einem der vorhergehenden Ansprüche,
**dadurch gekennzeichnet,**
**dass** die ermittelten Basiseinstellungen (74) für beliebige Arbeitsmaschinen (1, 2) verfügbar sind.

18. Verfahren zum Betreiben von Arbeitsmaschinen nach einem der vorhergehenden Ansprüche,
**dadurch gekennzeichnet,**
**dass** die Basiseinstellungen (74) in Abhängigkeit von relevanten inneren und äußeren Randbedingungen (58, 62) abrufbar sind.

19. Verfahren zum Betreiben von Arbeitsmaschinen nach einem der vorhergehenden Ansprüche,
**dadurch gekennzeichnet,**
**dass** die Basiseinstellungen (74) durch den Bediener (36) der Arbeitsmaschine (1, 2) vorgenommen werden oder deren Einstellung an der Arbeitsmaschine (1, 2) selbsttätig erfolgt.

20. Verfahren zum Betreiben von Arbeitsmaschinen nach einem der vorhergehenden Ansprüche,
**dadurch gekennzeichnet,**
**dass** die Basiseinstellungen (74) änderbar sind.

21. Verfahren zum Betreiben von Arbeitsmaschinen nach einem der vorhergehenden Ansprüche,
**dadurch gekennzeichnet,**
**dass** die Generierung des ausgeprägten Benutzerverhaltens (68) zentral erfolgt und eine Vielzahl von Arbeitsmaschinen (1, 2) auf diese zentral generierten Daten (71, 73, 74) zugreifen können.

22. Verfahren zum Betreiben von Arbeitsmaschinen nach einem der vorhergehenden Ansprüche,
**dadurch gekennzeichnet,**
**dass** die Generierung des ausgeprägten Benutzerverhaltens (68) dezentral erfolgt und wobei nur eine Auswahl von Arbeitsmaschinen (1, 2) auf diese dezentral generierten Daten (71, 73, 74) zugreifen können.

23. Verfahren zum Betreiben von Arbeitsmaschinen nach einem der vorhergehenden Ansprüche,
**dadurch gekennzeichnet,**
**dass** die Arbeitsmaschinen (1) Iandwirtschaftliche Arbeitsmaschinen (2) sind.

24. Vorrichtung zum Betreiben von Arbeitsmaschinen wobei der Sollwert mindestens eines spezifischen Parameters der Arbeitsmaschinen änderbar ist und dieser geänderte Sollwert den Istwert des spezifischen Parameters der jeweiligen Arbeitsmaschine bildet,
**dadurch gekennzeichnet,**
**dass** eine Vielzahl von Arbeitsmaschinen (1, 2) zumindest eine Eingabe- und Anzeigeeinheit (37) zur Generierung von Datensätzen (66) aufweisen und diese Datensätze (66) über ein Datenaustauschsystem (57) an ein Datenbanksystem (67) übergeben werden und wobei das Datenbanksystem (67) aus diesen Datensätzen (66) ein ausgeprägtes Benutzerverhalten (68) generiert welches über das Datenaustauschsystem (57) von der Eingabe- und Anzeigeeinheit (37) einer Vielzahl von Arbeitsmaschinen (1, 2) abrufbar ist.

## Claims

1. A method of operating working machines wherein the reference value of at least one specific parameter of the working machines is changeable and that changed reference value forms the actual value of the specific parameter of the respective working machine,
**characterised in that** a characteristic user behaviour (68) is derived from the change in the respective reference value (64) of a plurality of working machines (1, 2).

2. A method of operating working machines according to claim 1 **characterised in that** the change in the respective reference value (64) of the at least one specific parameter (27) of a plurality of working machines (1, 2) is registered and the frequency (H) of the change in the respective reference value (64) is ascertained.

3. A method of operating working machines according to one of the preceding claims **characterised in that** the change in the respective reference value (64) is ascertained qualitatively (Hqa) and/or quantitatively (Hqn).

4. A method of operating working machines according to one of the preceding claims **characterised in that** the changed reference values (64) form actual values (65) and the actual values (65) are assembled in frequency classes (Hk) of the same or similar actual values (65) and the frequency (H) of the change in the reference values (64) on which the actual values (65) are based is ascertained from those frequency classes (Hk).

5. A method of operating working machines according to one of the preceding claims **characterised in that** qualitative ascertainment of the frequency (Hqa) of the change in the reference value (64) includes registration of the number of changes in the respective reference value (64).

6. A method of operating working machines according to one of the preceding claims **characterised in that** quantitative ascertainment of the frequency (Hqa) of the change in the reference value (64) includes registration of the change in the respective reference value (64) within ranges of the same or similar actual values (65).

7. A method of operating working machines according to one of the preceding claims **characterised in that** the change in the reference values (64) is effected by experienced operators (36) of the working machines (1, 2).

8. A method of operating working machines according to one of the preceding claims **characterised in that** registration of the change in the reference value (64) of the specific parameter (27) of the working machine (1, 2) is effected in event-controlled fashion.

9. A method of operating working machines according to one of the preceding claims **characterised in that** the ascertained frequencies (H, Hqa, Hqn) and at least the parameters of the frequency classes (Hk) can be stored in dependence on inner and outer boundary conditions (58, 62) in data sets (69).

10. A method of operating working machines according to claim 9 **characterised in that** the parameters of the frequency classes (Hk) include the respective actual values (65).

11. A method of operating working machines according to claim 9 **characterised in that** the inner boundary conditions (58) include specific parameters (27) of the working machine (1, 2).

12. A method of operating working machines according to claim 9 **characterised in that** the outer boundary conditions (62) can be weather-specific data (59), geographical data (60) and crop material-specific data (61).

13. A method of operating working machines according to one of the preceding claims **characterised in that** the characteristic user behaviour (68) is defined by data sets (71) which can include reference values (70) defined by the actual values (65), the frequencies (H, Hqa, Hqn), the parameters of the frequency classes (Hk) and the inner and outer boundary conditions (58, 62).

14. A method of operating working machines according to one of the preceding claims **characterised in that** derived from the ascertained characteristic user behaviour (68) by means of rule generators (72) are general rules which can be transferred on to specific parameters (27) of other working machines (1, 2) under other inner and outer boundary conditions (58, 62).

15. A method of operating working machines according to one of the preceding claims **characterised in that** specific customer profiles (73) can be produced from the ascertained characteristic user behaviour (68) having regard to inner boundary conditions (58) and/or outer boundary conditions (62).

16. A method of operating working machines according to one of the preceding claims **characterised in that** the ascertained characteristic user behaviour (68) is used for generating base settings (74) of the reference values (64) of the specific parameters (27) of the working machine (1, 2).

17. A method of operating working machines according to one of the preceding claims **characterised in that** the ascertained base settings (74) are available for any working machines (1, 2).

18. A method of operating working machines according to one of the preceding claims **characterised in that** the base settings (74) can be retrieved in dependence on relevant inner and outer boundary conditions (58, 62).

19. A method of operating working machines according to one of the preceding claims **characterised in that** the base settings (74) are effected by the operator (36) of the working machine (1, 2) or setting thereof is effected automatically at the working machine (1, 2).

20. A method of operating working machines according to one of the preceding claims **characterised in that** the base settings (74) are changeable.

21. A method of operating working machines according to one of the preceding claims **characterised in that** generation of the characteristic user behaviour (68) is effected centrally and a plurality of working machines (1, 2) can access those centrally generated data (71, 73, 74).

22. A method of operating working machines according to one of the preceding claims **characterised in that** generation of the characteristic user behaviour (68) is effected decentrally and wherein only a selection of working machines (1, 2) can access those decentrally generated data (71, 73, 74).

23. A method of operating working machines according to one of the preceding claims **characterised in that** the working machines (1) are agricultural working machines (2).

24. Apparatus for operating working machines wherein the reference value of at least one specific parameter of the working machines is changeable and that changed reference value forms the actual value of the specific parameter of the respective working machine,
**characterised in that**
a plurality of working machines (1, 2) have at least one input and display unit (37) for the generation of data sets (66), and said data sets (66) are passed by way of a data exchange system (57) to a database system (67) and wherein the database system (67) generates from those data sets (66) a characteristic user behaviour (68) which can be retrieved by way of the data exchange system (57) by the input and display unit (37) of a plurality of working machines (1, 2).

## Revendications

1. Procédé pour exploiter des engins, la valeur de consigne d'au moins un paramètre spécifique des engins étant modifiable et cette valeur de consigne modifiée formant la valeur réelle du paramètre spécifique de l'engin considéré, **caractérisé en ce qu'**un comportement utilisateur caractéristique (68) est déduit de la modification de la valeur de consigne considérée (64) d'une pluralité d'engins (1,2).

2. Procédé pour exploiter des engins selon la revendication 1, **caractérisé en ce que** la modification de la valeur de consigne considérée (64) du au moins un paramètre spécifique (27) d'une pluralité d'engins (1, 2) est enregistrée et la fréquence (H) de modification de la valeur de consigne considérée (64) est déterminée.

3. Procédé pour exploiter des engins selon une des revendications précédentes, **caractérisé en ce que** la modification de la valeur de consigne considérée (64) est déterminée de manière qualitative (Hqa) et/ou quantitative (Hqn).

4. Procédé pour exploiter des engins selon une des revendications précédentes, **caractérisé en ce que** les valeurs de consigne modifiées (64) forment des valeurs réelles (65), et les valeurs réelles (65) sont regroupées dans des classes de fréquence (Hk) de valeurs réelles identiques ou semblables (65), et la fréquence (H) de modification des valeurs de consigne (64) à l'origine des valeurs réelles (65) est déterminée à partir de ces classes de fréquence (Hk).

5. Procédé pour exploiter des engins selon une des revendications précédentes, **caractérisé en ce que** la détermination qualitative de la fréquence (Hqa) de modification de la valeur de consigne (64) englobe l'enregistrement du nombre de modifications de la valeur de consigne considérée (64).

6. Procédé pour exploiter des engins selon une des revendications précédentes, **caractérisé en ce que** la détermination quantitative de la fréquence (Hqn) de modification de la valeur de consigne (64) englobe l'enregistrement de la modification de la valeur de consigne considérée (64) dans des plages de valeurs réelles identiques ou semblables (65).

7. Procédé pour exploiter des engins selon une des revendications précédentes, **caractérisé en ce que** la modification des valeurs de consigne (64) est effectuée par des utilisateurs expérimentés (36) des engins (1, 2).

8. Procédé pour exploiter des engins selon une des revendications précédentes, **caractérisé en ce que** l'enregistrement de la modification de la valeur de consigne (64) du paramètre spécifique (27) de l'engin (1, 2) s'effectue en fonction d'événements.

9. Procédé pour exploiter des engins selon une des revendications précédentes, **caractérisé en ce que** les fréquences déterminées (H, Hqa, Hqn) et au moins les paramètres des classes de fréquence (Hk) sont mémorisables dans des ensembles de données (69) en fonction de conditions marginales intérieures et/ou extérieures (58, 62).

10. Procédé pour exploiter des engins selon la revendication 9, **caractérisé en ce que** les paramètres des classes de fréquence (Hk) englobent les valeurs réelles considérées (65).

11. Procédé pour exploiter des engins selon la revendication 9, **caractérisé en ce que** les conditions marginales intérieures (58) englobent des paramètres spécifiques (27) de l'engin (1, 2).

12. Procédé pour exploiter des engins selon la revendication 9, **caractérisé en ce que** les conditions marginales extérieures (62) peuvent être des données spécifiques à la météorologie (59), des données géographiques (60) et des données spécifiques au produit récolté (61).

13. Procédé pour exploiter des engins selon une des revendications précédentes, **caractérisé en ce que** le comportement utilisateur caractéristique (68) est défini par des ensembles de données (71) qui peuvent englober des valeurs de consigne (70) définies par les valeurs réelles (65), les fréquences (H, Hqa, Hqn), les paramètres des classes de fréquence (Hk) et les conditions marginales intérieures et extérieures (58, 62).

14. Procédé pour exploiter des engins selon une des revendications précédentes, **caractérisé en ce qu'**à partir du comportement utilisateur caractéristique déterminé (68) sont déduites, au moyen d'un générateur de règles (72), des règles générales qui sont transposables à des paramètres spécifiques (27) d'autres engins (1, 2) soumis à d'autres conditions marginales intérieures et extérieures (58, 62).

15. Procédé pour exploiter des engins selon une des revendications précédentes, **caractérisé en ce que** des profils clients spécifiques (73) peuvent être créés à partir du comportement utilisateur caractéristique déterminé (68) en tenant compte de conditions marginales intérieures (58) et/ou de conditions marginales extérieures (62).

16. Procédé pour exploiter des engins selon une des revendications précédentes, **caractérisé en ce que** le comportement utilisateur caractéristique déterminé (68) est utilisé pour générer des réglages de base (74) des valeurs de consigne (64) des paramètres spécifiques (27) de l'engin (1, 2).

17. Procédé pour exploiter des engins selon une des revendications précédentes, **caractérisé en ce que** les réglages de base déterminés (74) sont disponibles pour n'importe lequel des engins quelconques (1, 2).

18. Procédé pour exploiter des engins selon une des revendications précédentes, **caractérisé en ce que** les réglages de base (74) peuvent être rappelés en fonction de conditions marginales intérieures et extérieures correspondantes (58, 62).

19. Procédé pour exploiter des engins selon une des revendications précédentes, **caractérisé en ce que** les réglages de base (74) sont réalisés par l'utilisateur (36) de l'engin (1, 2) ou leur mise en oeuvre s'effectue automatiquement au niveau de l'engin (1, 2).

20. Procédé pour exploiter des engins selon une des revendications précédentes, **caractérisé en ce que** les réglages de base (74) sont modifiables.

21. Procédé pour exploiter des engins selon une des revendications précédentes, **caractérisé en ce que** le comportement utilisateur caractéristique (68) est généré en mode centralisé, et une pluralité d'engins (1, 2) peut accéder à ces données générées en mode centralisé (71, 73, 74).

22. Procédé pour exploiter des engins selon une des revendications précédentes, **caractérisé en ce que** le comportement utilisateur caractéristique (68) est généré en mode décentralisé et seule une sélection d'engins (1, 2) peut accéder à ces données générées en mode décentralisé (71, 73, 74).

23. Procédé pour exploiter des engins selon une des revendications précédentes, **caractérisé en ce que** les engins (1) sont des engins agricoles (2).

24. Dispositif pour exploiter des engins, la valeur de consigne d'au moins un paramètre spécifique des engins étant modifiable et cette valeur de consigne modifiée formant la valeur réelle du paramètre spécifique de l'engin considéré, **caractérisé en ce qu'**une pluralité d'engins (1, 2) comporte au moins une unité d'entrée et d'affichage (37) pour générer des ensembles de données (66), et ces ensembles de données (66) sont transmis par l'intermédiaire d'un système d'échange de données (57) à un système de banque de données (67) et, à partir de ces ensembles de données (66), le système de banque de données (67) génère un comportement utilisateur caractéristique (68) qui, par l'intermédiaire du système d'échange de données (57), peut être rappelé par l'unité d'entrée et d'affichage (37) d'une pluralité d'engins (1,2).
